# EUROPÄISCHE PATENTSCHRIFT

(11) **EP 1 190 798 B1**
(45) Veröffentlichungstag und Bekanntmachung des Hinweises auf die Patenterteilung: **08.12.2004**
(21) Anmeldenummer: 01118947.9
(22) Anmeldetag: 12.02.1996
(51) Int. Cl.: B23B 29/034, B23B 5/40, B23C 3/05

(54) **Werkzeugkopf mit verstellbarem Schneidenträger**
Toolhead with adjustable cutter-carrier
Tête d'usinage avec porte-outil ajustable

(30) Priorität: 03.03.1995 DE 19507471
(43) Veröffentlichungstag der Anmeldung: 27.03.2002
(62) Teilanmeldung aus: 96902863.8
(73) Patentinhaber: KOMET GROUP Holding GmbH, 74354 Besigheim (DE)
(72) Erfinder: Scheer, Gerhard, 74369 Löchgau (DE)
(74) Vertreter: Wolf, Eckhard, Dr.-Ing.

(56) Entgegenhaltungen:
- DE-A- 4 100 330
- GB-A- 1 562 065
- US-A- 2 431 476
- US-A- 2 532 058
- US-A- 3 157 068
- US-A- 3 710 659
- US-A- 5 044 841

## Beschreibung

Die Erfindung betrifft einen Werkzeugkopf für den Einsatz in Werkzeugmaschinen mit einem Grundkörper, einem axial über dem Grundkörper überstehenden, mit einer rotierenden Maschinenspindel kuppelbaren Werkzeugschaft, mit einem relativ zum Grundkörper verschiebbaren Schubglied zur Verstellung mindestens eines Schneidenträgers oder Schneidwerkzeugs, mit einer im Grundkörper angeordneten, mit dem Schubglied kuppelbaren elektrischen Motoranordnung und mit einer Stromversorgungseinrichtung für die Motoranordnung.

Es ist ein Werkzeugkopf dieser Art bekannt (US-A-3710659), der einen zentral angeordneten elektrischen Antriebsmotor mit axial ausgerichteter Abtriebswelle für den Antrieb von quer zur Drehachse des Werkzeugkopfs verschiebbaren Schiebern aufweist. Eine Übertragung des Antriebsprinzips auf andere Anwendungen ist nicht ohne weiteres möglich.

Der Erfindung liegt die Aufgabe zugrunde, einen Werkzeugkopf der eingangs angegebenen Art zu entwickeln, der als Kombinationswerkzeug bei der Fertigbearbeitung von kompliziert gestalteten Werkstücken geeignet ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung ist gekennzeichnet durch einen stirnseitig am Grundkörper angeordneten, mindestens eine Schneidplatte tragenden Wechselschneidkopf und ein im Inneren des Grundkörpers angeordnetes, mit Hilfe der Motoranordnung axial verschiebbares Kupplungselement zur Aufnahme eines durch eine stirnseitige Zentralöffnung des Wechselschneidkopfs hindurchgreifenden und wahlweise in das Innere des Grundkörpers und/oder des Wechselschneidkopfs einziehbaren Reib- oder Bohrwerkzeugs. Das Kupplungselement ist dabei zweckmäßig als Spannfutter, insbesondere als Spannzangenpinole ausgebildet. Grundsätzlich kann das Kupplungselement auch ein Innengewinde zur Aufnahme des ein komplementäres Außengewinde tragenden Werkzeugschafts aufweisen.

Das Kupplungselement ist zweckmäßig mit Spiel in einem am Schubglied angeformten Kopfstück dreh- und verschiebefest gelagert und weist bevorzugt eine im Umriß mehrkantige Mitnehmerpartie und zwei an die Mitnehmerpartie nach entgegengesetzten Seiten überstehende Kugelkalotten auf. Aufgrund seiner Spielfreiheitsgrade sorgt es dafür, daß auf das Werkzeug keine Zwangskräfte wirken.

In das Kupplungselement kann eine Reibahle zum Bearbeiten einer Stößelführungsbüchse eines Zylinderkopfs eingespannt oder eingeschraubt werden, während der Wechselschneidkopf eine vorzugsweise winkelverstellbare Schneidplatte zum Stirnen eines zur Stößelführungsbüchse koaxialen Ventilsitzrings trägt. Der Wechselschneidkopf kann zusätzlich mindestens eine weitere Schneide zur Erzeugung einer den Ventilsitz begrenzenden Außenund/oder Innenfase tragen.

Die Stromversorgungseinrichtung für die Elektromotoren und die Meß- und Steuerungselektronik weist vorteilhafterweise eine induktive Strom- und Datenübertragungsstrecke mit einer in einem maschinenseitigen Spulengehäuse angeordneten Primärspule und einer in einem werkzeugkopfseitigen, den Werkzeugschaft ringförmig umgreifenden Spulengehäuse angeordneten Sekundärspule auf, wobei die Spulengehäuse bei mit der Maschinenspindel gekuppeltem Werkzeugschaft durch einen Luftspalt voneinander getrennt sind. Im maschinenseitigen und/oder werkzeugkopfseitigen Spulengehäuse ist zweckmäßig eine mit der Primär- bzw. Sekundärspule verbundene Primär- oder Sekundärelektronik zur Stromaufbereitung und/oder -stabilisierung angeordnet.

Im folgenden wird die Erfindung anhand der in der Zeichnung in schematischer Weise dargestellten Ausführungsbeispiele näher erläutert. Es zeigen
- Fig. 1: einen Axialschnitt durch einen zur Fertigbearbeitung von Ventilsitzringen und Stößelführungsbüchsen in Zylinderköpfen bestimmten Werkzeugkopf;
- Fig. 2: einen Schnitt durch den Positionierantrieb des Werkzeugkopfs nach Fig. 1 in vergrößerter Darstellung;
- Fig. 3: eine Draufsicht auf den Positionierantrieb nach Fig. 2;
- Fig. 4a und b: das Schubglied mit Spannzangenpinole in einer teilweise geschnittenen Seitenansicht und einer Draufsicht;
- Fig. 5a und b: das Schubglied mit einem ein Innengewinde aufweisenden Kupplungselement in teilweise geschnittener Seitenansicht und einer Draufsicht.

Der in der Zeichnung dargestellte Werkzeugkopf 10 besteht im wesentlichen aus einem Grundkörper 12, einem axial über den Grundkörper 12 überstehenden, mit einer motorisch antreibbaren, rotierenden Maschinenspindel 14 einer Werkzeugmaschine kuppelbaren Werkzeugschaft 16, einem achszentral im Grundkörper 12 angeordneten, axial verschiebbaren Schubglied 18 zur Verstellung mindestens eines Schneidenträgers oder Schneidwerkzeugs, einer im Grundkörper 12 angeordneten, mit dem Schubglied 18 kuppelbaren elektrischen Motoranordnung 24 und mit einer Stromversorgungseinrichtung 26 für die Motoranordnung 24 und eine im Grundkörper angeordnete Meßund Steuerelektronik 28.

Die Stromversorgungseinrichtung 26 besteht aus einem Spulengehäuse 30, in welchem sich eine in einer mechanisch belastbaren Masse aus Kunststoff oder Kunstharz eingebettete Sekundärspule 32 mit zugehöriger Stabilisierungselektronik befindet, die Bestandteil einer induktiven Übertragungsstrekke ist. Die Primärspule der induktiven Übertragungsstrecke ist zusammen mit der zugehörigen Stromaufbereitungselektronik in einem maschinenseitigen Gehäuse 34 angeordnet, das radial außerhalb des Werkzeugschafts 16 in den freien axialen Zwischenraum zwischen der Stirnfläche der Maschinenspindel 14 und der freien Stirnfläche des werkzeugkopfseitigen Spulengehäuses 30 eingreift. Die primärseitige Elektronik ist über ein Stromkabel 36 mit einem nicht dargestellten Netzteil verbunden. Das maschinenseitige Spulengehäuse 34 erstreckt sich segmentartig nur über einen Teilumfang von etwa 70° des Werkzeugschaftes 16 und läßt den überwiegenden Teil des Schaftumfangs unter Bildung eines Freiraums 38 für den Zugriff eines Werkzeuggreifers für den automatischen Werkzeugwechsel frei. Beim Werkzeugwechsel wird der Werkzeugkopf 10 an der Greiferrille 40 erfaßt und bei gelöster Werkzeugkupplung axial gegenüber der Maschinenspindel 14 verschoben.

Das Schubglied 18 weist einen mit einem Außengewinde 42 versehenen Gewindekörper 44 auf, der mit einem axial in Richtung Werkzeugschaft 16 überstehenden Führungszapfen 46 in einer grundkörperfesten Schubführung 48 verdrehungssicher axial geführt ist. Für den Antrieb des Schubglieds ist im Grundkörper 12 eine Hohlwelle 50 um eine zur Verschiebeachse 52 des Schubglieds 18 konzentrische Drehachse drehbar gelagert, die ein in das Außengewinde 42 des Gewindekörpers 44 eingreifendes komplementäres Innengewinde 54 aufweist. Die Hohlwelle 50 ist in einem grundkörperfesten Motorblock 56 in axialen und radialen Gleitlagern 58 drehbar und verschiebefest gelagert und weist an ihrem einen stirnseitigen Ende einen Ringflansch 60 mit einem auf der Seite des Motorblocks 56 radial außerhalb des Innengewindes 54 angeordneten Innenzahnrad 62 auf. Der das Innenzahnrad 62 bildende Zahnkranz ist mittels Schrauben 64 am Ringflansch 60 befestigt.

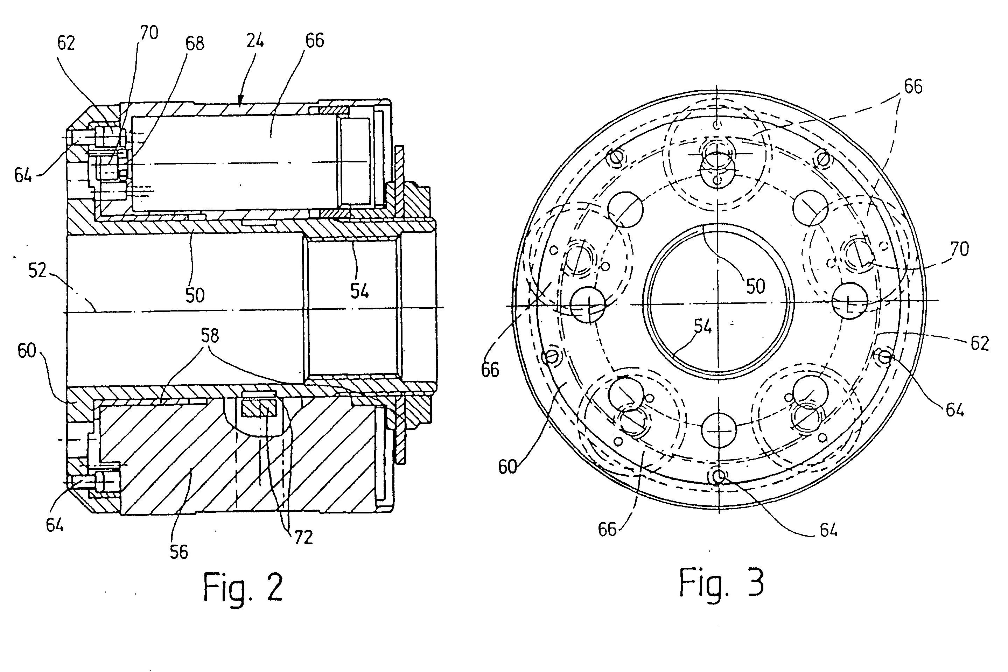

Der Motorblock 56 weist vorzugsweise als Schritt- oder Servomotor ausgebildete Elektromotoren 66 auf. Bei dem in Fig. 3 gezeigten Ausführungsbeispiel sind fünf numerisch ansteuerbare Schrittmotoren 66 in achsparalleler Ausrichtung so angeordnet, daß ihre auf der jeweiligen Abtriebswelle 68 angeordneten Zahnräder 70 gemeinsam mit dem hohlwellenfesten Innenzahnrad 62 kämmen. Die Ansteuerung des Motorblocks 56 erfolgt NC-gesteuert über die induktive Übertragungsstrecke 32,34. Zur Drehzahl- und Drehrichtungsüberwachung ist ein als Inkrementalgeber ausgebildeter Sensor 72 im Bereich zwischen Motorblock 56 und Hohlwelle 50 angeordnet. Alternativ dazu kann zur Drehzahl- und Drehrichtungsüberwachung ein mit einem der Motoren 66 verbundener Encoder 72' vorgesehen werden.

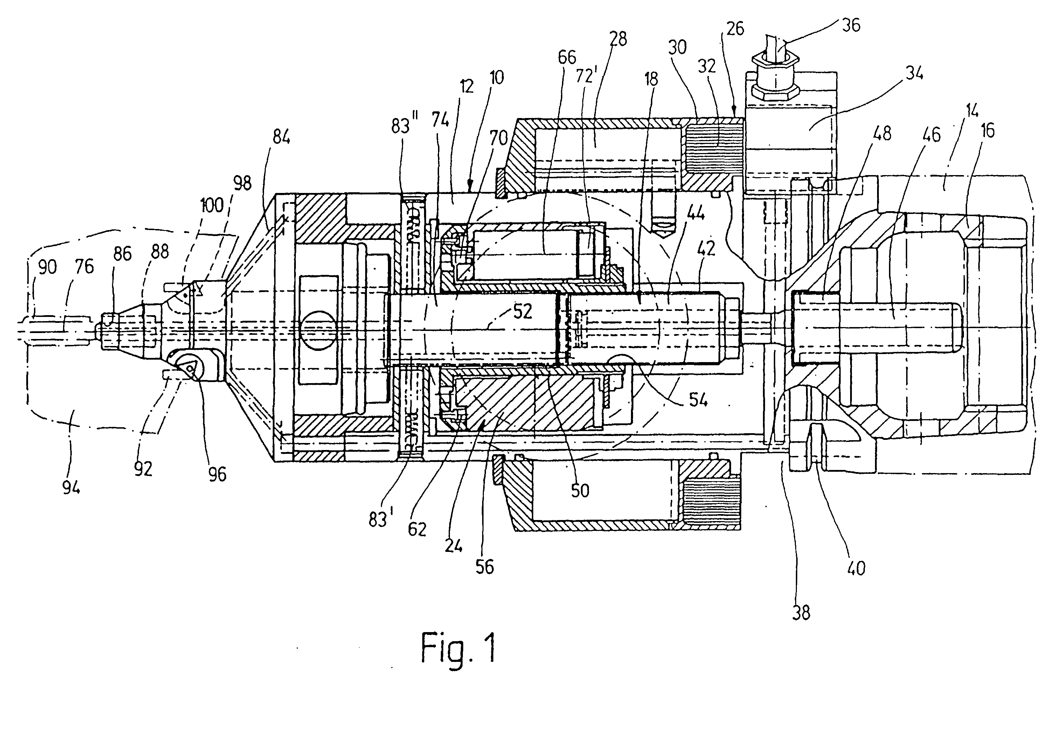

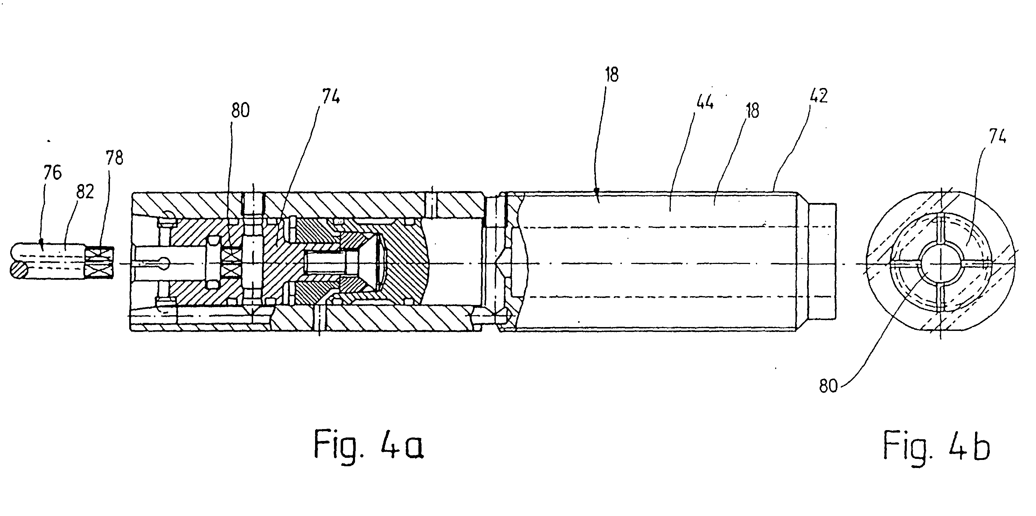

Bei dem in Fig. 1, 4a und b gezeigten Ausführungsbeispiel ist der Werkzeugkopf für die Fertigbearbeitung von Ventilsitzringen 92 und Stößelführungsbuchsen 90 eines Zylinderkopfs 94 bestimmt. Das Schubglied 18 ist zu diesem Zweck starr mit einem stirnseitig innerhalb des Grundkörpers 12 angeordneten, als Spannzangenpinole ausgebildeten Spannfutter 74 verbunden, das zur Aufnahme einer Reibahle 76 bestimmt ist. Wie insbesondere aus Fig. 4a und b zu ersehen ist, wird die Reibahle 76 in das Spannfutter 74 eingeführt und wird dort mit ihrer Schlüsselfläche 78 in der Mehrkantaufnahme 80 drehfest gehalten und an ihrem Schaft 82 eingespannt. Das Einspannen und Lösen erfolgt zweckmäßig von außen her mit einem mechanisch betätigten Spanner oder je einem luftbetätigten Impulsspanner 83',83".

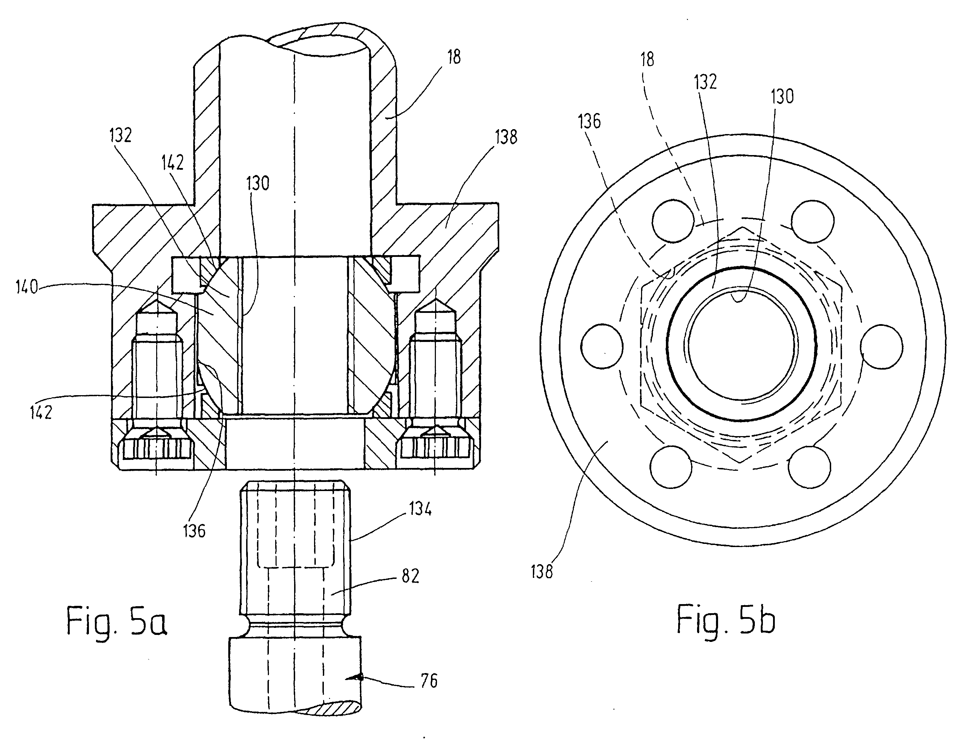

Das in Fig. 5a und b gezeigte Ausführungsbeispiel unterscheidet sich von dem Ausführungsbeispiel nach Fig. 4a und b dadurch, daß statt des Spannfutters 74 ein mit einem Innengewinde 130 versehenes Kupplungselement 132 vorgesehen ist, in dessen Innengewinde 130 die Reibahle 76 mit seinem ein komplementäres Außengewinde 134 tragenden Schaft 82 eindrehbar ist. Das Kupplungselement 132 ist dreh- und verschiebefest in eine Aufnahme 136 eines an dem Schubglied 18 angeformten, verbreiterten Kopfstücks 138 angeordnet. Das Kupplungselement weist zu diesem Zweck eine im Umriß sechskantige Mitnehmerpartie 140 und zwei an die Mitnehmerpartie nach entgegengesetzten Seiten anschließende Kugelkalotten 142 auf, während die Aufnahme 136 im Schubglied 18 eine zum Kupplungselement 132 komplementäre Innenkontur aufweist. Durch die schwimmende Lagerung des Kupplungselements 132 in der Aufnahme 136 wird erreicht, daß auf die Reibahle 76 beim Bearbeitungsvorgang keine unzulässigen Zwangskräfte ausgeübt werden.

Zusätzlich trägt der in Fig. 1 gezeigte Werkzeugkopf einen stirnseitig am Grundkörper 12 lösbar angeordneten Wechselschneidkopf 84, der eine stirnseitige Zentralöffnung 86 und eine Führungsbüchse 88 für den Durchtritt der mit dem Spannfutter 74 verbundenen Reibahle 76 aufweist. Die Reibahle ist zur Bearbeitung einer in Fig. 1 strichpunktiert angedeuteten Stößelführungsbüchse 90 eines Zylinderkopfs 94 bestimmt. Zum Stirnen des Ventilsitzrings 92 des Zylinderkopfs 94 ist am Wechselschneidkopf 84 eine winkelverstellbare Schneidplatte 96 vorgesehen. Außerdem trägt der Wechselschneidkopf 84 zwei weitere Schneidplatten 98,100 zur Erzeugung einer den Ventilsitz begrenzenden Außen- und Innenfase. Die Stößelführungsbüchse wird dabei durch die in dem Spannfutter 74 eingespannte und mit dem Schubglied 18 axial verschiebbare Reibahle 76 ausgerieben, nachdem zuvor in der gleichen Einspannung des Werkzeugs 10 der Ventilsitz im Ventilsitzring 92 und die Schutzfasen des Ventilsitzes feingedreht worden sind. Die Reihenfolge der Bearbeitung kann auch umgekehrt werden. Wichtig ist nur, daß während der Reibahlenbearbeitung die Schneiden keinen Kontakt mit dem Ventilsitz haben und daß während der Bearbeitung des Ventilsitzes die Reibahle nicht in die Stößelführungsbüchse eingreift.

Ein wesentlicher Vorteil des vorstehend beschriebenen Positionierantriebs besteht darin, daß er mit einer leistungsfähigen Motoranordnung 24 bestückt ist, die maschinenseitig angeordnete Betätigungseinrichtungen entbehrlich macht und daher einen automatischen Werkzeugwechsel und einen Einsatz in Bearbeitungsmaschinen mit rotierender Maschinenspindel ermöglicht.

Zusammenfassend ist folgendes festzustellen: Die Erfindung bezieht sich auf einen Werkzeugkopf für den Einsatz in Werkzeugmaschinen. Der Werkzeugkopf weist einen Grundkörper 12, einen axial über den Grundkörper 12 überstehenden, mit einer rotierenden Maschinenspindel 14 kuppelbaren Werkzeugschaft 16 und ein relativ zum Grundkörper 12 verschiebbares Schubglied 18 zur Verstellung mindestens eines Schneidenträgers oder Schneidwerkzeugs auf. Weiter ist im Grundkörper eine mit dem Schubglied 18 kuppelbare elektrische Motoranordnung 24 sowie eine Stromversorgungseinrichtung 26 für die Motoranordnung angeordnet. Um eine Feinbearbeitung auch kompliziert gestalteter Werkstücke zu ermöglichen, wird gemäß der Erfindung ein stirnseitig am Grundkörper 12 angeordneter, mindestens eine Schneidplatte tragender Wechselschneidkopf 84 sowie ein im Inneren des Grundkörpers 12 angeordnetes, mit Hilfe der Motoranordnung axial verschiebbares Kupplungselement 74,132 vorgeschlagen. Das Kupplungselement ist zur Aufnahme eines durch eine stirnseitige Zentralöffnung 86 des Wechselschneidkopfs 84 hindurchgreifenden und wahlweise in das Innere des Grundkörpers 12 und/oder des Wechselschneidkopfs 84 einziehbaren Reib- oder Bohrwerkzeugs 76 bestimmt.

## Patentansprüche

1. Werkzeugkopf für den Einsatz in Werkzeugmaschinen mit einem Grundkörper (12), einem axial über den Grundkörper (12) überstehenden, mit einer rotierenden Maschinenspindel (14) kuppelbaren Werkzeugschaft (16), mit einem relativ zum Grundkörper (12) verschiebbaren Schubglied (18) zur Verstellung mindestens eines Schneidenträgers oder Schneidwerkzeugs (76), mit einer im Grundkörper (12) angeordneten, mit dem Schubglied (18) kuppelbaren elektrischen Motoranordnung (24) und mit einer Stromversorgungseinrichtung (26) für die Motoranordnung (24), **gekennzeichnet durch** einen stirnseitig am Grundkörper (12) angeordneten, mindestens eine Schneidplatte tragenden Wechselschneidkopf (84) und ein im Inneren des Grundkörpers (12) angeordnetes, mit Hilfe der Motoranordnung axial verschiebbares Kupplungselement (74,132) zur Aufnahme eines **durch** eine stirnseitige Zentralöffnung (86) des Wechselschneidkopfs (84) hindurchgreifenden und wahlweise in das Innere des Grundkörpers (12) und/oder des Wechselschneidkopfs (84) einziehbaren Reib- oder Bohrwerkzeugs (76).

2. Werkzeugkopf nach Anspruch 1, **dadurch gekennzeichnet, daß** das Kupplungselement als Spannfutter (74), insbesondere als Spannzangenpinole ausgebildet ist.

3. Werkzeugkopf nach Anspruch 1, **dadurch gekennzeichnet, daß** das Kupplungselement (132) ein Innengewinde (130) zur Aufnahme des ein komplementäres Außengewinde (134) tragenden Reib- oder Bohrwerkzeugs (76) aufweist.

4. Werkzeugkopf nach Anspruch 3, **dadurch gekennzeichnet, daß** das Kupplungselement mit Spiel in einem Kopfstück (138) des Schubglieds (18) dreh- und verschiebefest gelagert ist.

5. Werkzeugkopf nach Anspruch 4, **dadurch gekennzeichnet, daß** das Kupplungselement (132) eine im Umriß mehrkantige Mitnehmerpartie (140) und zwei an die Mitnehmerpartie nach entgegengesetzten Seiten anschließende Kugelkalotten (142) aufweist.

6. Werkzeugkopf nach einem der Ansprüche 1 bis 5, **dadurch gekennzeichnet, daß** mit dem Kupplungselement (74,132) eine Reibahle (76) zur Bearbeitung einer Stößelführungsbüchse (90) eines Zylinderkopfs verbindbar ist.

7. Werkzeugkopf nach einem der Ansprüche 1 bis 6, **dadurch gekennzeichnet, daß** der Wechselschneidkopf (84) eine winkelverstellbare Schneidplatte (96) zum Feindrehen eines zur Stößelführungsbüchse koaxialen Ventilsitzrings (92) trägt.

8. Werkzeugkopf nach Anspruch 7, **dadurch gekennzeichnet, daß** der Wechselschneidkopf (84) mindestens eine weitere Schneidplatte (98,100) zur Erzeugung einer den Ventilsitz begrenzenden Außenund/oder Innenfase trägt.

9. Werkzeugkopf nach einem der Ansprüche 1 bis 8, **dadurch gekennzeichnet, daß** die Stromversorgungseinrichtung (26) eine induktive Strom- und Datenübertragungsstrecke mit einer in einem maschinenseitigen Spulengehäuse (34) angeordneten Primärspule und einer in einem werkzeugkopfseitigen, den Werkzeugschaft (16) ringförmig umgreifenden Spulengehäuse (30) angeordneten Sekundärspule (32) aufweist, wobei die Spulengehäuse (30,34) bei mit der Maschinenspindel (14) gekuppeltem Werkzeugschaft (16) durch einen Luftspalt voneinander getrennt sind.

10. Werkzeugkopf nach Anspruch 9, **dadurch gekennzeichnet, daß** im maschinenseitigen und/oder werkzeugkopfseitigen Spulengehäuse (34,30) eine mit der Primär- bzw. Sekundärspule verbundene Primäroder Sekundärelektronik zur Stromaufbereitung und/oder -stabilisierung angeordnet ist.

11. Werkzeugkopf nach Anspruch 9 oder 10, **dadurch gekennzeichnet, daß** das maschinenseitige Spulengehäuse (34) sich segmentartig nur über einen Teilumfang des Werkzeugschafts (16) erstreckt und den überwiegenden Teil des Schaftumfangs unter Bildung eines Freiraums für den Zugriff eines Werkzeuggreifers freiläßt.

12. Werkzeugkopf nach einem der Ansprüche 9 bis 11, **dadurch gekennzeichnet, daß** die Motoranordnung NC-gesteuert über die induktive Übertragungsstrecke (32,34) ansteuerbar ist.

13. Werkzeugkopf nach einem der Ansprüche 9 bis 12, **dadurch gekennzeichnet, daß** die Spulengehäuse (30,34) durch einen axialen Luftspalt voneinander getrennt sind.

## Claims

1. Tool head for use in machine tools comprising a basic body (12), a tool shank (16) projecting axially beyond the basic body (12) and connectable to a rotating machine spindle (14), a thrust element (18) displaceable relative to the basic body (12) for adjusting at least one cutting-edge carrier or cutting tool (76), an electric motor arrangement (24) disposed in the basic body (12) and connectable to the thrust element (18), and a power supply device (26) for the motor arrangement (24), **characterized by** an interchangeable cutting head (84), which is disposed on the front of the basic body (12) and carries at least one tool tip, and by a coupling element (74, 132), which is disposed in the interior of the basic body (12) and is axially displaceable with the aid of the motor arrangement, for receiving a reaming or drilling tool (76), which engages through a front central opening (86) of the interchangeable cutting head (84) and is selectively retractable into the interior of the basic body (12) and/or of the interchangeable cutting head (84).

2. Tool head according to claim 1, **characterized in that** the coupling element is designed as a chuck (74), in particular as a collet chuck quill.

3. Tool head according to claim 1, **characterized in that** the coupling element (132) has an internal thread (130) for receiving the reaming or drilling tool (76), which carries a complementary external thread (134).

4. Tool head according to claim 3, **characterized in that** the coupling element is mounted with play and locked against rotation and displacement in a head piece (138) of the thrust element (18).

5. Tool head according to claim 4, **characterized in that** the coupling element (132) comprises an, in contour, polygonal driver portion (140) and two spherical cups (142) adjoining the driver portion on opposite sides.

6. Tool head according to one of claims 1 to 5, **characterized in that** a reamer (76) for machining a tappet guide bush (90) of a cylinder head is connectable to the coupling element (74, 132).

7. Tool head according to one of claims 1 to 6, **characterized in that** the interchangeable cutting head (84) carries an adjustable-angle tool tip (96) for effecting the high-precision cutting of a valve seat ring (92), which is coaxial with the tappet guide bush.

8. Tool head according to claim 7, **characterized in that** the interchangeable cutting head (84) carries at least one further tool tip (98, 100) for producing an external and/or internal chamfer delimiting the valve seat.

9. Tool head according to one of claims 1 to 8, **characterized in that** the power supply device (26) comprises an inductive current and data transfer link comprising a primary coil disposed in a machine-side coil housing (34) and a secondary coil (32) disposed in a tool head-side coil housing (30) encircling the tool shank (16), wherein, when the tool shank (16) is coupled to the machine spindle (14), the coil housings (30, 34) are separated from one another by an air gap.

10. Tool head according to claim 9, **characterized in that** a primary or secondary electronic device connected to the primary or secondary coil is disposed in the machine-side and/or tool head-side coil housing (34, 30) for current conditioning and/or current stabilizing purposes.

11. Tool head according to claim 9 or 10, **characterized in that** the machine-side coil housing (34) extends in a segment-like manner only over a portion of the circumference of the tool shank (16), leaving the predominant portion of the shank circumference free and forming a clearance to provide access for a tool gripper.

12. Tool head according to one of claims 9 to 11, **characterized in that** the motor arrangement is numerically controllable via the inductive transfer link (32, 34).

13. Tool head according to one of claims 9 to 12, **characterized in that** the coil housings (30, 34) are separated from one another by an axial air gap.

## Revendications

1. Tête porte-outil à utiliser dans des machines-outils, avec un corps de base (12), avec une tige porte-outil (16) dépassant axialement du corps de base (12) et pouvant être couplée avec une broche de machine rotative (14), avec un baladeur (18) pouvant coulisser par rapport au corps de base (12) pour déplacer au moins un support de lame ou outil tranchant (76), avec un agencement de moteurs électriques (24) disposé dans le corps de base (12) et pouvant être couplé avec le baladeur (18), et avec un dispositif (26) d'alimentation électrique pour l'agencement de moteurs (24), **caractérisée par** une tête porte-fraise de rechange (84) disposée du côté frontal sur le corps de base (12) et portant au moins une matrice d'ébavurage, et par un élément de couplage (74, 132) disposé à l'intérieur du corps de base (12) et mobile axialement à l'aide de l'agencement de moteurs, pour recevoir un outil (76) à râper ou à aléser traversant un orifice central frontal (86) de la tête porte-fraise de rechange (84) et rétractable au choix à l'intérieur du corps de base (12) et/ou de la tête porte-fraise de rechange (84).

2. Tête porte-outil selon la revendication 1, **caractérisée en ce que** l'élément de couplage est réalisé sous la forme d'un mandrin de serrage (74), notamment d'un mandrin de pince de serrage.

3. Tête porte-outil selon la revendication 1, **caractérisée en ce que** l'élément de couplage (132) présente un filetage intérieur (130) pour recevoir l'outil (76) à râper ou à aléser portant un filetage extérieur complémentaire (134).

4. Tête porte-outil selon la revendication 3, **caractérisée en ce que** l'élément de couplage est monté de façon verrouillée en rotation et en déplacement avec un certain jeu dans une pièce de tête (138) du baladeur (18).

5. Tête porte-outil selon la revendication 4, **caractérisée en ce que** l'élément de couplage (132) présente une partie d'entraînement (140) de contour polygonal et deux calottes sphériques (142) adjacentes à la partie d'entraînement sur des côtés opposés.

6. Tête porte-outil selon l'une des revendications 1 à 5, **caractérisée en ce qu'**un alésoir (76) pour usiner une douille (90) de guidage de poussoir d'une culasse peut être relié à l'élément de couplage (74, 132).

7. Tête porte-outil selon l'une des revendications 1 à 6, **caractérisée en ce que** la tête porte-fraise de rechange (84) porte une matrice d'ébavurage (96) à ajustage angulaire pour le tournage de précision d'un siège rapporté de soupape (92) coaxial par rapport à la douille de guidage de poussoir.

8. Tête porte-outil selon la revendication 7, **caractérisée en ce que** la tête porte-fraise de rechange (84) porte au moins une autre matrice d'ébavurage (98, 100) pour créer une face de dépouille extérieure et/ou intérieure délimitant le siège de soupape.

9. Tête porte-outil selon l'une des revendications 1 à 8, **caractérisée en ce que** le dispositif (26) d'alimentation électrique présente une voie inductive de transmission de courant et de données avec une bobine primaire disposée dans une carcasse de bobine (34) côté machine et une bobine secondaire (32) disposée dans une carcasse de bobine (30) entourant de façon annulaire la tige porte-outil (16) côté tête porte-outil, les carcasses de bobine (30, 34) étant séparées l'une de l'autre par un entrefer lorsque la tige porte-outil (16) est couplée avec la broche de machine (14).

10. Tête porte-outil selon la revendication 9, **caractérisée en ce qu'**une électronique primaire ou secondaire, reliée à la bobine primaire ou respectivement secondaire, est disposée dans la carcasse de bobine (34, 30) côté machine et/ou côté tête porte-outil pour le traitement et/ou la stabilisation du courant.

11. Tête porte-outil selon la revendication 9 ou 10, **caractérisée en ce que** la carcasse de bobine (34) côté machine s'étend comme un segment uniquement sur une circonférence partielle de la tige porte-outil (16) et laisse libre la plus grande partie de la circonférence de la tige, en créant un espace libre pour l'accès d'un preneur d'outil.

12. Tête porte-outil selon l'une des revendications 9 à 11, **caractérisée en ce que** l'agencement de moteurs peut être commandé par une commande numérique par l'intermédiaire de la voie de transmission inductive (32, 34).

13. Tête porte-outil selon l'une des revendications 9 à 12, **caractérisée en ce que** les carcasses de bobine (30, 34) sont séparées l'une de l'autre par un entrefer axial.
